(19) Europäisches Patentamt
European Patent Office
Office européen des brevets

(11) Publication number: **0 040 139**
**A2**

# (12) EUROPEAN PATENT APPLICATION

(21) Application number: 81400709.2

(22) Date of filing: 06.05.81

(51) Int. Cl.³: C 08 G 63/68
C 08 G 63/18, C 09 B 1/58

(30) Priority: 08.05.80 US 147978

(43) Date of publication of application: 18.11.81 Bulletin 81/46

(84) Designated Contracting States: BE DE FR GB IT NL

(71) Applicant: EASTMAN KODAK COMPANY
343 State Street
Rochester, New York 14650(US)

(72) Inventor: Davis, Thomas Glen
P.O. Box 511
Kingsport Tennessee(US)

(72) Inventor: Weaver, Max Allen
P.O. Box 511
Kingsport Tennessee(US)

(74) Representative: Parent, Yves et al,
KODAK-PATHE 30, rue des Vignerons
F-94300 Vincennes(FR)

## (54) Polyester polymers comprising copolymerised moieties derived from anthraquinone dyes.

(57) Disclosed are anthraquinone dyes useful for incorporation by copolymerization into polyesters which may be used, for example, to mold colored beverage bottles. The dyes are copolymerized with the polyester, are thermally stable at the temperatures used to process the polyesters, and are colorfast and nonextractable from the polyester. The dyes have the general formula:

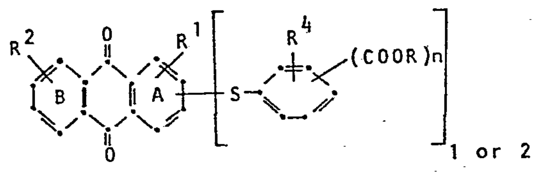

wherein either or both of rings A and B may contain in any position thereon one or two groups of the formula

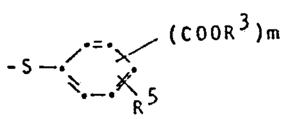

;

R and R³ each is hydrogen or lower alkyl;
R¹, R², R⁴ and R⁵ each represents 0-3 substituents selected from lower alkyl; lower alkyl substituted with lower alkoxy, phenyl, Cl, Br or lower alkanoylamino; lower alkoxy; lower alkoxy substituted with lower alkoxy, phenyl, Cl, Br, or lower alkanoylamino; chlorine; bromine; amino; lower alkyl amino; lower alkylamino substituted with lower alkoxy, cyclohexyl, phenyl, Cl, Br, or lower alkanoylamino; arylamino; arylthio; aroylamin; wherein each aforesaid aryl moiety is 6-10 carbons; lower alkylsulfonyl; lower alkylthio; lower alkanoylamino; and cyclohexylamino; and n and m are each 1 or 2.

EP 0 040 139 A2

# POLYESTER POLYMERS COMPRISING COPOLYMERISED MOIETIES DERIVED FROM ANTHRAQUINONE DYES.

This invention relates to anthraquinone dyes, that are copolymerized into linear saturated or unsaturated crosslinkable polyesters to impart color to the polyesters. The dyes copolymerized with the polyester, are thermally stable at the temperatures used to process the polyester, and are color-fast and nonextractable from the polymer.

Anthraquinone dyes have been copolymerized with poly(ethylene terephthalate) to impart color to the polyester. See Japanese Patents 72 13,384 and 72 13,395. Abstracts of these patents appear in Chemical Abstracts, Vol. 77, 1972, Page 72, 166060j and 166061K. These prior art dyes color the polyester either blue or red, but the colored polyesters have poor light-fastness properties. The dyed polyesters of this invention have much better light-fastness properties and the dyes are more useful commercially, for example, to impart color into polyesters that are used to mold beverage bottles.

The dyes that are copolymerized with the polyesters have the formula :

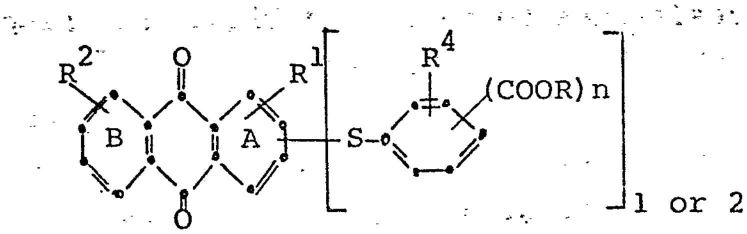

wherein either or both or rings A and B may contain in any position thereon one or two groups of the formula

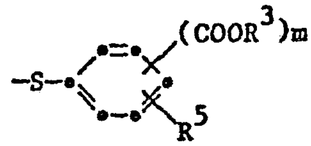 ;

R and $R^3$ each is hydrogen or lower alkyl; $R^1$, $R^2$, $R^4$ and $R^5$ each represents 0-3 substituents selected from lower alkyl; lower alkyl substituted with lower alkoxy, phenyl, Cl, Br, or lower alkanoylamino; lower alkoxy; lower alkoxy substituted with lower alkoxy, phenyl Cl, Br, or lower alkanoylamino; chlorine; bromine; amino; lower alkyl amino; lower alkylamino substituted with lower alkoxy, cyclohexyl, phenyl, Cl, Br, or lower alkanoylamino; arylamino; arylthio; aroylamino; wherein each aforesaid aryl moiety is 6-10 carbons; lower alkylsulfonyl; lower alkylthio; lower alkanoylamino; and cyclohexylamino; and n and m are each 1 or 2. The term "lower" as used herein means 1-6 carbons.

The above dyes can also be used in conventional exhaust dyeing of a variety of fibers including polyester, polyamide, and cellulose ester, in addition to dyeing polyesters by incorporation into the molecule. These dyes have excellent heat stability and resistance to fading by light, and also exhibit good wash and crock fastness, build, leveling, pH stability, dye bath exhaustion rate, and gas fastness when used on synthetic fibers, particularly polyesters. Brightly colored polyesters can be obtained by copolymerization of one or more of the dyes with polyesters that can be blown into bottles and/or molded into other useful articles. A large variety of colors can be obtained with mixtures of these dyes and by mixing various pigments with the

dyed polyesters. Also, fillers can be admixed with the dyed polyesters.

The above anthraquinone dyes can be prepared by reacting known halogen-containing anthraquinones with unsubstituted or substituted ortho, meta or para mercapto benzoic acids, or their lower alkyl esters. The reaction can be carried out by heating a mixture of the halogenated anthraquinone compound with a mercaptobenzoic acid, or its ester, in solvents such as N,N-dimethylformamide, N,N-dimethylacetamide, or N-methyl-2-pyrrolidinone, in the presence of an acid acceptor such as an alkali metal carbonate. Appropriate halogenated anthraquinone intermediates suitable for use in making these dyes include 1-chloroanthraquinone, 2-chloroanthraquinone, 1,5-dichloroanthraquinone, 1,8-dichloroanthrquinone, 1,4-dichloroanthraquinone, 2,6-dichloroanthraquinone, 1-bromo-2-methyl-anthraquinone 1-bromo-2-methoxyanthraquinone, 1-bromo-4-methylaminoanthraquione, 1-amino-4-bromo-2-methoxyanthraquinone, 1-amino-4-anilino-2-bromoanthraquinone, 1-amino-4-bromo-2-methylsulfonylanthraquinone, 1,5-diamino-4,8-dichloroanthraquinone, 4,5-diamino-1,8-dihydroxy-2,6-dibromoanthraquinone, 1,4,5,8-tetrachloroanthraquinone, 1,4-diamino-5,8-dichloroanthraquinone, 1,4-diamino-6-chloroanthraquinone, 1-amino-2,4-dibromoanthraquinone, 1-amino-4-bromo-2-chloroanthraquinone, 1-bromo-4-cyclohexylaminoanthraquinone, 1-bromo-4-phenylethylaminoanthraquinone, 2,6-dibromo-1,4,5,8-tetraminoanthraquinone, 1-amino-4-bromo-2-methylthioanthraquinone, and 1,4-diamino-2,3-dichloroanthraquinone.

The following specific example illustrates the preparation of these dyes and the copolymerization of these dyes with polyesters.

EXEMPLE 1

Dye Preparation

A mixture of 1,5-dichloroanthraquinone (13.8 grams, 0.05 mole), O-mercapto benzoic acid (15.4 grams, 0.10 mole), potassium carbonate (13.8 grams, 0.10 mole), and N,N-dimethylformamide (200 ml) was heated at approximately 125°C. for four hours. The reaction mixture was allowed to cool to room temperature and then drowned into water (500 ml) and acidified with acetic acid to a pH of about 5.0. The dye was collected by filtration, washed with hot water, and then dried in air to yield 23.5 grams of 1,5-bis (2-carboxyphenylthio) anthraquinone.

Copolymerizing the Dye into Polyester.

145.5 grams (0.75 mole) dimethyl terephthalate
89.0 grams (1.44 moles) ethylene glycol
32.8 grams (0.23 mole) 1,4-cyclohexanedimethanol
120.0 ppm Ti catalyst
200.0 ppm yellow dye 1,5-bis(2-carboxyphenylthio)-anthraquinone.

The above ingredients were added to a 500 ml round-bottom flask fitted with a stirrer, condensate take-off, and nitrogen inlet head. The flask and contents were immersed into a metal bath at approximately 170°C. The temperature was raised to 195°C and maintained for two hours and twenty minutes while ester exchange and esterification of the dimethyl terephthalate, ethylene glycol, 1,4-cyclo-hexanedimethanol, and 1,5-bis(2-carboxy-phenylthio)anthraquinone took place. The temperature was then raised to 285°C. During all of the above reactions, a nitrogen purge of approximately 56 cubic decimeters/hour. was maintained over the reactants. At 285°C, the melt was placed under 0.10 mm vacuum and polymerization was continued for 50 minutes. The resulting polyester was colored a brilliant yellow and

had an inherent viscosity of 0.739 in a 60/40 ratio by weight of phenol/tetrachloroethane solvent.

When the dye compound is monofunctional, it acts as a chain terminator for the polyester. Additional compounds that can be used to dye polyesters are shown in the following table.

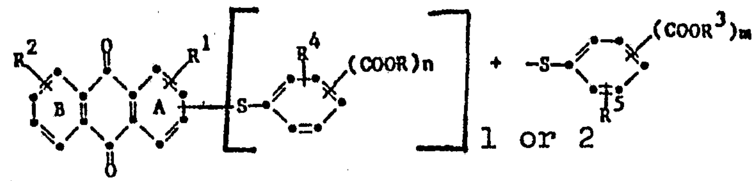

1 or 2

| Example No. | Position of 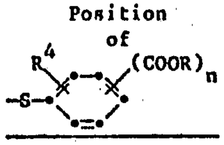 | Position of 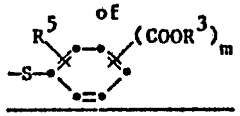 | Position of —COOR | Position of —$COOR^3$ | R | $R^3$ | $R^1$ | $R^2$ | $R^4$ | $R^5$ |
|---|---|---|---|---|---|---|---|---|---|---|
| 2 | 1 | 8 | p | p | H | H | H | H | H | H |
| 3 | 2 | 6 | p | p | $CH_3$ | $CH_3$ | H | H | H | H |
| 4 | 1,4 | — | o | — | H | — | H | H | H | — |
| 5 | 4 | — | o | — | H | — | 1—$NHCH_3$ | H | H | — |
| 6 | 2,4 | — | o | — | H | — | 1—$NH_2$ | H | H | — |
| 7 | 1 | — | m | — | $C_2H_5$ | — | 2—$CH_3$ | H | H | — |
| 8 | 4 | — | o | — | H | — | 1—$NH_2$—2—$OCH_3$ | H | H | — |
| 9 | 2 | — | o | — | H | — | 1—$NH_2$—4—$NHC_6H_5$ | H | H | — |
| 10 | 1,4 | 5,8 | o | o | H | H | H | H | p—$CH_3$ | p—Cl |
| 11 | 1 | 5,8 | o | o | — | H | 1,4—di—$NH_2$ | H | p—$CH_3$ | p—$OCH_3$ |
| 12 | 1 | 6 | o | p | — | $CH(CH_3)_3$ | 1,4—di—$NH_2$ | H | H | H |
| 13 | 1 | — | o | — | H | — | H | H | H | — |
| 14 | 4 | — | o | — | H | — | 1—$NH_2$—2—Cl | H | p—Cl | — |
| 15 | 4 | — | o | — | H | — | 1—$NHC_6H_{11}$ | H | H | — |

| | | | | | | | | | | |
|---|---|---|---|---|---|---|---|---|---|---|
| 16 | 4 | — | o | — | H | — | 1-$NHC_2H_4C_6H_5$ | H | p-$NH_2$ | — |
| 17 | 2 | — | o | — | H | — | 1,4-di-$NH_2$ | H | H | — |
| 18 | 2 | 7 | o | o | H | H | 1,4-di-$NH_2$ | 5,8-di-$NH_2$ | H | H |
| 19 | 2 | 6 | o | o | H | H | 1-$NH_2$-4-OH | 5-$NH_2$-8-OH | H | H |
| 20 | 4 | — | o | — | H | — | 1-$NH_2$-2-$SCH_3$ | H | p-$CH_2NHCOCH_3$ | — |
| 21 | 4 | — | o | — | H | — | 1-$NH_2$-2-$SO_2CH_3$ | H | p-$SO_2CH_3$ | — |
| 22 | 1 | 5 | p | p | $CH_3$ | $CH_3$ | H | H | H | o-Cl |
| 23 | 1 | 5 | m | m | H | H | H | H | H | H |
| 24 | 1 | 5 | o | o | $CH_3$ | $CH_3$ | H | H | H | H |
| 25 | 1 | 5 | p | p | $C_2H_4OH$ | $C_2H_4OH$ | H | H | H | H |
| 26 | 1 | 5 | p | p | $C_4H_9$-n | $C_4H_9$-n | H | H | H | H |
| 27 | 2,4 | — | p | — | $CH_3$ | — | 1-$NH_2$ | H | p-$OCH_3$ | — |
| 28 | 2,4 | — | o | — | $CH_3$ | — | 1-$NH_2$ | H | H | — |
| 29 | 4 | — | o | — | H | — | 1-$NHC_6H_5$ | H | H | — |
| 30 | 1 | 8 | o, p | p | H | H | H | H | H | o-$SCH_3$ |
| 31 | 2 | 6 | o, p | p | $CH_3$ | $CH_3$ | H | H | H | H |
| 32 | 1,4 | — | o, m | — | H | — | H | H | H | — |
| 33 | 4 | — | o, m | — | H | — | 1-$NHCH_3$ | H | H | — |
| 34 | 2,4 | — | o, p | — | H | — | 1-$NH_2$ | H | H | — |
| 35 | 1 | — | m, p | — | $C_2H_5$ | — | H | H | H | — |
| 36 | 4 | 6 | m, p | o, p | H | H | 1-$NH_2$-2-$OCH_2CH_2Cl$ | H | H | H |
| 37 | 1 | 4 | o | o | H | H | H | H | H | H |

The polyesters that are used are linear saturated and unsaturated crosslinkable and are those disclosed, for example, in U.S. Patents 2,465,319, 3,668,277; 3,560,445, and Br. 578,079. Exemplary polyesters are those produced from one or more diols such as 1,4-bis(hydroxymethyl)cyclohexane; ethylene glycol; 1,2-propanediol; 1,3-propanediol, 1,2-butanediol; 2,3-butanediol; 1,3-butanediol; 1,4-butanediol; 2,2-dimethyl-1,3-propanediol; 2,3-propanediol; 1,6-hexanediol; 2-ethylhexanediol; 1,2-cyclohexanediol; 1,4-cyclohexnediol, 1,2-bis(hydroxymethyl)cyclohexane; 1,3-bis-(hydroxymethyl)-cyclohexane; x,8-bis-(hydroxymethyl)tricyclo-[5.2.1.0]-decane wherein x represents 3, 4 or 5; and diols containing one or more oxygen atoms in the chain, e.g., diethylene glycol, triethylene glycol, dipropylene glycol or tripropylene glycol. Useful diols contain two to 18, preferably two to 12 carbon atoms. Cycloaliphatic diols can be employed in their cis or trans configuration or as a mixture of both forms.

The acids used to form the polyesters may contain one or more of a cyclic dicarboxylic acid and/or acyclic dicarboxylic acid. Examples of suitable aromatic and cycloaliphatic dicarboxylic acids are terephthalic acid, isophthalic acid, hexahydroterephthalic acid, tetrahydrophthalic acid, hexahydrophthalic acid, hexahydroisophthalic acid, as well as endomethylene- and endoethylene-tetrahydrophthalic acid hexachloroendomethylenetetrahydrophthalic acid or tetrabromophthalic acid. The cycloaliphatic dicarboxylic acids can be employed in their trans or cis configuration or as a mixture of both forms. The use of dicarboxylic acids wherein the carboxyl groups are arranged in the 1,2- or in

the 1,3-position is preferred. Especially preferred are those dicarboxylic acids wherein the carboxyl groups are arranged in the 1,2-position. Of these, phthalic acid and hexahydrophthalic acid are especially preferred. The cyclic dicarboxylic acids can contain eight to 12 carbon atoms, preferably eight to 10 carbon atoms. The carbocyclic dicarboxylic acids are preferred, especially the monocyclic carboxylic, e.g., wherein the ring is a benzene, cyclohexane or bridged cyclohexane ring. Also useful are succinic, glutaric, adipic, suberic, sebacic, decanedicarboxylic, 2,2,4-trimethyladipic acid, maleic, fumaric, itaconic and citraconic acids. In place of the cyclic and/or acyclic dicarboxylic acids themselves, it is possible and often preferable to use a functional acid derivative thereof. For example, instead of the free dicarboxylic acids, esters thereof with lower-alkanols can be employed, for example, the dimethyl, diethyl or dipropyl ester. The anhydrides of the dicarboxylic acids can likewise be employed, for example, phthalic anhydride, hexahydrophthalic anhydride, tetrahydrophthalic anhydride, succinic anhydride, glutaric anhydride and maleic anhydride.

The polyesters can be produced according to conventional processes, for example, with or without a catalyst, with or without the introduction of an inert gas stream, as solution condensation in a solvent, as a melt condensation or azeotropic esterification, at temperatures of up to about 250°C., or higher so that the water or alkanol produced by the esterification is continuously removed. The esterification takes place almost quantitatively and can be followed by measuring the hydroxyl and acid numbers. The esterification temperature may be selected so that the losses of readily

volatile substances remain small. Thus, during at least the first period of the esterification, the process is conducted at a temperature below the boiling point of the lowest-boiling starting substance.

The unsaturated, crosslinkable polyesters are the polyesterification products of one or more dihydric alcohols and one or more unsaturated dicarboxylic acids or their anhydrides, and the term "polyester resin" is used herein to define the unsaturated polyester dissolved in, or cross-linked with, an ethylenically unsaturated monomer. An example is the polyesterification product of (a) 1,4-cyclohexanedimethanol and/or 2,2-dimethyl-1,3-propanediol and optionally an additional dihydric alcohol, such as ethylene glycol, and (b) maleic acid or fumaric acid or the anhydride of maleic acid, and an unsaturated hydrogenated aromatic dicarboxylic acid, which when crosslinked with an ethylenically-unsaturated monomer, for example styrene, produces a polyester resin which has high thermal resistance, high heat distortion values, excellent electrical and mechanical properties, and excellent resistance to chemicals.

The unsaturated polyesters can be prepared in the presence of gelation inhibitors, such as hydroquinone, which are well known in the art of polyesterification. The esterification can be carried out under an inert blanket of gas, such as nitrogen, in a temperature range of 118-220°C. for a period of about 6-20 hours until an acid number below 100 and preferably below 50 is obtained, based on milliequivalents of KOH necessary to neutralize 1 gram of the polyester. The resulting polyesters can be dissolved in and subsequently copolymerized with any of the well-known ethylenically unsaturated

monomers used as solvents and copolymerizable monomers for polyesters. Examples of such monomers include styrene, alphamethyl styrene, vinyl toluene, divinyl benzene and chlorostyrene as well as mixtures thereof.

The unsaturated polyesters can be prepared from one or more dihydric alcohols, fumaric or maleic acid or anhydride, and up to about 60 mole percent of total acid component of o-phthalic, isophthalic or terephthalic acids or anhydrides. Preferred for the dihydric alcohol component is one or more of propylene glycol, neopentyl glycol, 2,2,4-trimethyl-1,3-pentane-diol, ethylene glycol, and diethylene glycol. A preferred unsaturated polyester is prepared from propylene glycol, and as the acid component, o-phthalic anhydride and maleic anhydride in a mole ratio of from about 1/2 to about 2/1.

The anthraquinone dyes are used in the polyesters in coloring amounts from 1.0 to 5,000 and preferably 2.0 to 1500 parts of dye per million parts of polyester.

The preferred dyed polyesters are linear thermoplastic polyesters having an I.V. of from 0.4 to 0.8, the acid moiety of which comprises at least 50 mole percent terephthalic acid residue, and the glycol moiety of which comprises at least 50 mole percent ethylene glycol or 1,4-cyclohexanedimethanol residue, and containing from 2.0 to 1500 parts per million of one or more of the above copolymerized dyes.

An especially preferred polyester is prepared from dimethyl terephthalate, ethylene glycol, and from 0 to 30 mole % of 1,4-cyclohexanedimethanol based on total moles of glycol, containing from 2.0 to 1500 parts of one or more of the copolymerized dyes per one million parts of

polyester and particularly of the dye 1,5-bis-(2-carboxyphenylthio)anthraquinone.

Claims

1. Colored polymeric material comprising a linear, saturated thermoplastic or unsaturated crosslinkable polyester, containing a coloring amount of the copolymerized residue of one or more compounds of the formula

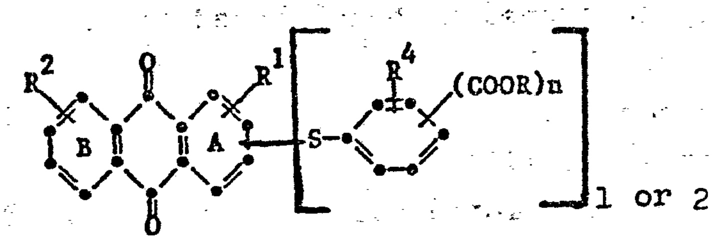

wherein either or both of rings A and B may contain in any position thereon one or two groups of the formula

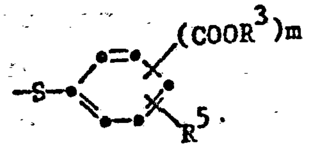

;

R and $R^3$ each is hydrogen or lower alkyl; $R^1$, $R^2$, $R^4$ and $R^5$ each represents 0-3 substituents selected from lower alkyl; lower alkyl substituted with lower alkoxy, phenyl, Cl, Br or lower alkanoylamino; lower alkoxy; lower alkoxy substituted with lower alkoxy, phenyl, Cl, Br, or lower alkanoylamino; chlorine; bromine; amino; lower alkyl amino; lower alkylamino substituted with lower alkoxy, cyclohexyl, phenyl, Cl, Br, or lower alkanoylamino; arylamino; arylthio; aroylamino; wherein each aforesaid aryl moiety is 6-10 carbons; lower alkylsulfonyl; lower alkylthio; lower alkanoylamino; and cyclohexylamino; and n and m are each 1 or 2.

2. The colored polymeric material of Claim 1 wherein the coloring compound is 1,5-bis(2-carboxyphenylthio)anthraquinone present in

a concentration of from 1.0 to 5,000 parts per million of the polyester.

3. The colored polymeric material of Claim 2 wherein the polyester is prepared from dimethyl terephthalate, ethylene glycol, and from 0 to 30 mole % of 1,4-cyclohexanedimethanol based on total moles of glycol, and each of the coloring compounds is present in reacted form in concentrations of from 2.0 to 1500 parts per million parts of polyester.

4. The colored polymeric material of Claim 1 wherein the polyester is unsaturated and is prepared from one or more dihydric alcohols, fumaric or maleic acid or anhydride, and up to 60 mole percent of total acid component of one or a mixture of o-phthalic, isophthalic, and terephthalic acids, and the coloring compounds are present in reacted form in concentrations of from 2.0 to 1500 parts per million parts of polyester.

5. The colored polymeric material of Claim 4 wherein the dihydric alcohol component is one or more of propylene glycol, neopentyl glycol, 2,2,4-trimethyl-1,3-pentanediol, ethylene glycol, and diethylene glycol.

6. The colored polymeric material of Claim 5 wherein the dihydric alcohol is propylene glycol and the acid component is o-phthalic anhydride and maleic anhydride in a mole ratio of from 1/2 to about 2/1.

7. The colored polymeric material according to Claim 1, wherein the coloring compound is one of the following

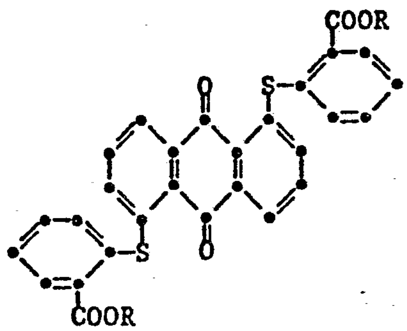

and